Europäisches Patentamt

(19) **European Patent Office**

**Office européen des brevets**

(11) Publication number: **0 050 017**
**A1**

(12) # EUROPEAN PATENT APPLICATION

(21) Application number: **81304699.2**

(22) Date of filing: **09.10.81**

(51) Int. Cl.³: **A 47 D 1/10**
**B 62 B 7/08**

(30) Priority: **10.10.80 GB 8032763**

(43) Date of publication of application:
**21.04.82 Bulletin 82/16**

(84) Designated Contracting States:
**AT BE CH DE FR GB IT LI LU NL SE**

(71) Applicant: ANDREWS MACLAREN LIMITED
Station Works, Long Buckby
Northampton NN6 7PF(GB)

(72) Inventor: Jones, Ian William
4 Ruskin Close
Rugby Warwickshire(GB)

(72) Inventor: Mortimer, Frank Radcliffe
104 Knoll Drive
Coventry CV3 5DD(GB)

(72) Inventor: Harvey, Samuel Eric
21 The Hiron
Coventry CV3 6HS(GB)

(74) Representative: Baker, Arthur et al,
c/o EDWARD EVANS & CO. Chancery House 53-64
Chancery Lane
London WC2A 1SD(GB)

(54) **Carrier for a baby or a child.**

(57) A carrier (1) has a body portion (2) arranged to accommodate a baby or child, in either a sitting or a recumbent position. A rigid handle (10) for carrying the carrier is arranged to secure the carrier to a chassis of a push chair comprising a plurality of interpivoted elongate rigid members foldable into a compact bundle or to a chassis of a rocking chair comprising two C-shaped frames which are foldable flat one on top of the other. The angular position of the carrier can be adjusted by a pawl and slotted wheel mechanism. The handle acts as a stand to support the carrier on the ground when separated from the chassis.

FIG. 1

"Carrier for a Baby or a Child"

TECHNICAL FIELD OF THE INVENTION

This invention relates to a carrier for a baby or a child and has an important application to a carrier in which a baby or a child can adopt a recumbent position.

BACKGROUND ART

The early forms of perambulator consisted of a sturdy box-like carrier in which the baby or a child could lie or sit and which was permanently mounted on a rigid chassis having four large wheels. More recently there have been developed baby carriages and push chairs comprising a folding chassis to which is attached a fabric seat in which a baby or child can be accommodated. In some of these latter arrangements it is possible for the child to adopt a recumbent position suitable for sleeping.

Both of the above-mentioned arrangements have disadvantages when they have to be moved by a motor car or by public transport such as a train or a bus. Thus while the former of these arrangements can accommodate a recumbent or sleeping child, it is extremely difficult or impossible to transport the perambulator in a car, train or on a bus. While the second of these arrangements can be folded so that it can be carried by car train or bus, the child must be removed from the fabric seat to permit the chassis to be folded.

An object of this invention is to provide a carrier for a baby or a child which alleviates the above-mentioned disadvantages.

DISCLOSURE OF THE INVENTION

According to the present invention there is provided a carrier shaped to accommodate a baby or a child in a sitting or a recumbent position, means for securing the carrier to a chassis, and a handle for carrying the carrier when the carrier is separated from the chassis.

Preferably the carrier is provided with means for adjusting the angular position of the carrier when secured to the chassis, and means for locking the carrier in at least two different angular positions.

Conveniently the means for adjusting the angular position of the carrier and locking the carrier in at least two angular positions comprises a pawl which co-operates with a slotted wheel mechanism.

Advantageously the means for locking the carrier in at least two angular positions is arranged to be locked and released using one hand.

Preferably the handle may be formed by a rigid member which is arranged to act as a stand to support the carrier on the ground when the carrier is separated from the chassis.

The handle may also form part of the means for securing the carrier to the chassis and may have limbs of channel-shaped cross-section which fit over members forming the chassis.

Alternatively, the means for securing the carrier to the chassis may comprise a plurality of screw threaded members which clamp the carrier to the chassis. The screw threaded members may be arranged to be tightened by the fingers and may be arranged to lock the carrier in at least two different angular positions. The handle may then be formed by a flexible member.

The body portion of the carrier which supports the baby or child may comprise a substantially rigid member and may be formed by a moulding of plastics material. The carrier may be provided with a textile cover filled with suitable foamed padding material.

The invention also resides in a carrier as defined above secured to a chassis comprising a plurality of elongate rigid members which are interpivoted and foldable into a compact bundle in which the rigid members extend substantially parallel to each other. The foldable chassis may be that of a rocking chair or a wheeled vehicle such as a push chair.

The handle of the carrier may comprise a rigid U-shaped member, the free ends of the side limbs of the U being respectively connected to opposite sides of the body portion which supports the baby or child, and the side limbs of the U being of channel-shaped cross-section and fitting over two correspondingly spaced elongate rigid members of the chassis.

When the chassis is that of a wheeled vehicle, such as a push chair, the spaced elongate rigid members over which are fitted the side limbs of the U-shaped member may form handles by which the chassis can be propelled.

The carrier may be secured to the chassis so that a baby or a child supported in the body portion faces toward the handles formed by the spaced elongate rigid members.

Alternatively, the carrier may be secured to the chassis so that a baby or a child supported in the body portion faces away from the handles formed by the spaced elongate rigid members.

When the chassis is that of a rocking chair and the handle of the carrier is a rigid U-shaped member, the side limbs of the U are respectively connected to similarly spaced rigid members of the chassis and a transverse member of the chassis is connected to the underside of the carrier.

An embodiment of the invention and various modifications thereof will now be described, by way of example, with reference to the accompanying drawings.

BRIEF DESCRIPTION OF THE DRAWINGS

Figure 1 is a perspective view of a carrier in accordance with the invention supported on the ground by the handle;

Figure 2 is another perspective view of the carrier with the handle detached from the body portion;

Figure 3 is a perspective view of the rear of the carrier;

Figure 4 is a rear elevation of a handle shown in Figure 2;

Figure 5 is a fragmentary section of the pawl and slotted wheel mechanism which locks the handle to the body portion;

Figure 6 is a fragmentary side view of the mechanism shown in Figure 5;

Figure 7 is a fragmentary view of a locking arrangement for the handle;

Figure 8 is a. perspective view of a chassis of a push chair to which the carrier can be secured;

Figure 9 is a perspective view of the carrier fitted to the chassis shown in Figure 8 in the sitting position with the body portion facing away from the handles;

Figure 10 is a perspective view similar to Figure 9 but with the carrier in the recumbent position;

Figure 11 is a perspective view of the carrier fitted to the chassis shown in Figure 8 in the recumbent position with the body portion facing toward the handles;

Figure 12 is a perspective view of the carrier fitted to the chassis of a rocking chair in the recumbent position;

Figure 13 is a perspective view showing a carrier detached from the chassis of the rocking chair;

Figure 14 is a perspective view similar to Figure 13 but with the chassis of the rocking chair folded; and

Figure 15 is a perspective view of the underside of the carrier showing the resilient clips by which the carrier is attached thereto.

BEST MODE FOR CARRYING OUT THE INVENTION

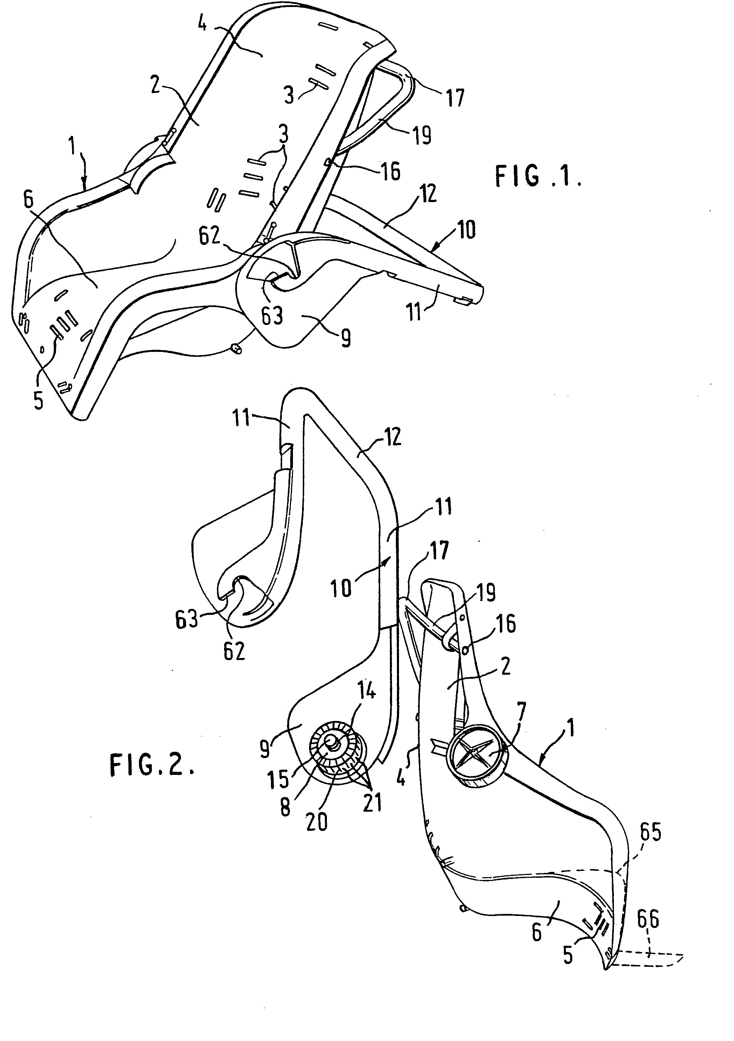

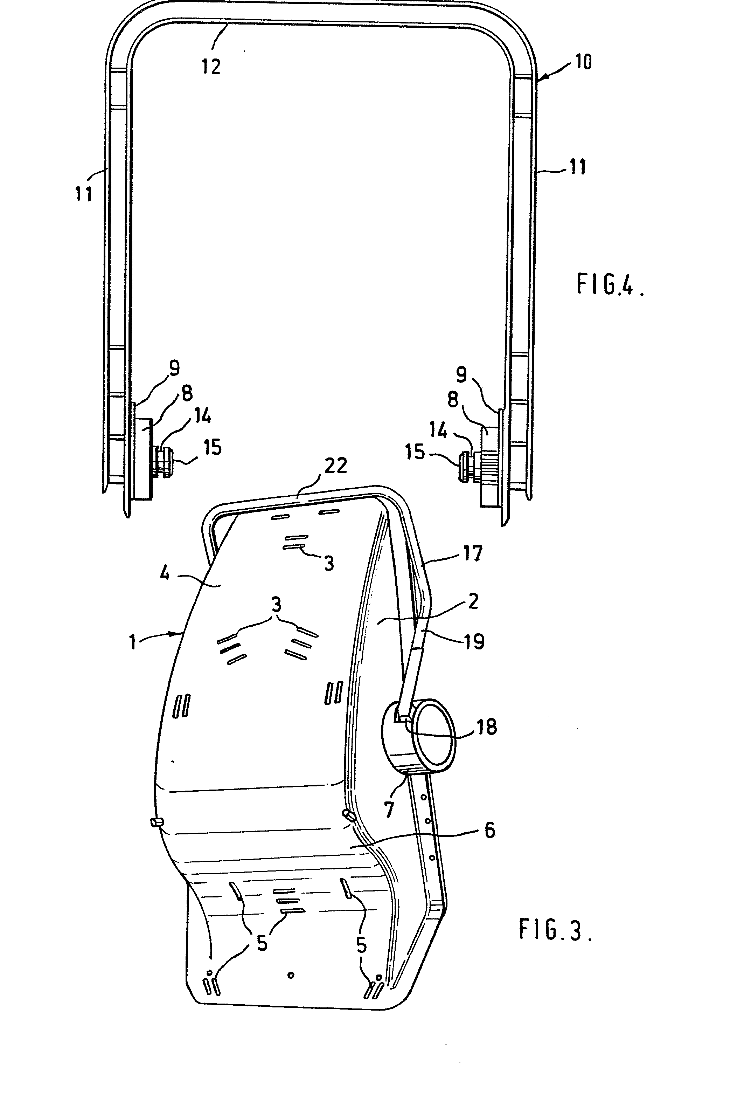

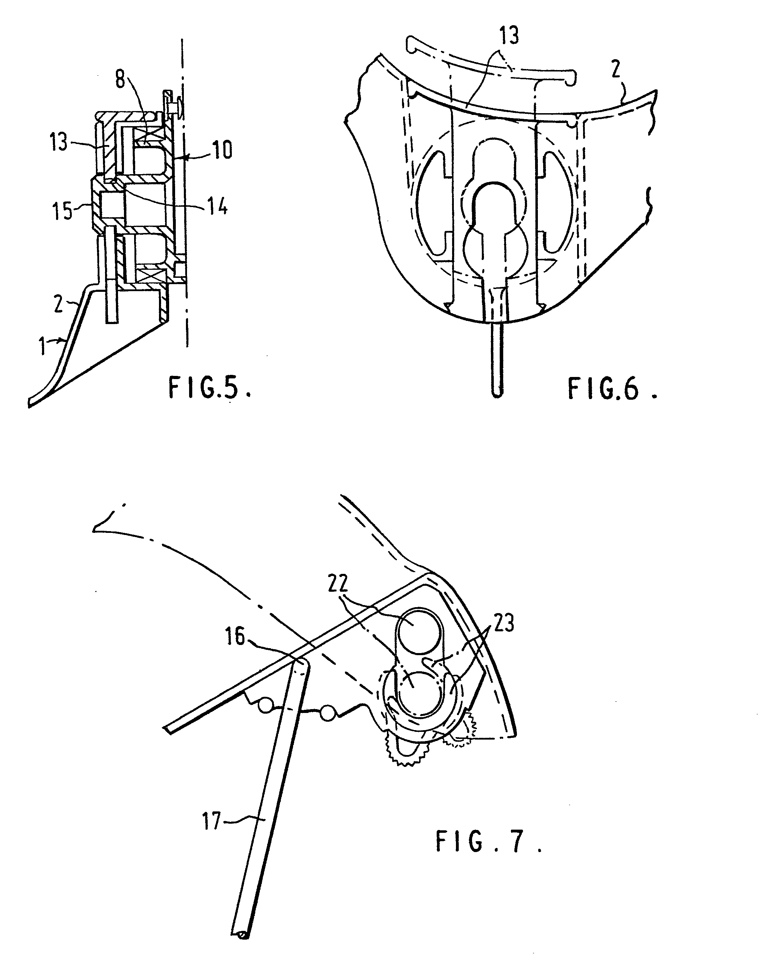

Referring in the first instance to Figures 1 to 7, a carrier 1 having a body portion 2 which is shaped to accommodate a baby or a child, is formed by a substantially rigid moulding of plastics material. The moulding, which is substantially L-shaped when seen in side view, has a substantially straight back portion 4 joined to a convex seat portion 6 by a concave intermediate portion. The seat portion 6 extends upwards at each side to form arm rests.

The moulding is provided with a plurality of narrow apertures 3 in its longer back portion 4 and a plurality of further narrow apertures 5 in its shorter seat portion 6. The edges of the back portion 4, the seat portion 6 and the arm rests are curled over to provide a rounded periphery. Tapes (not shown) can be fitted into the apertures 3 and 5 to allow the carrier 1 to be carried in front of a person or strapped into a car. Tapes fitted into apertures 3 and 5 may also form a harness which retains a child or baby in the carrier 1. The carrier 1 may be provided with a cover (not shown) of a textile or a synthetic material filled with suitable foamed padding material.

At each side of the body portion 2, at an intermediate position where the seat portion 6 joins the back portion 4, there is provided an upstanding circular wall 7 arranged to receive a slotted wheel 8 secured to an inwardly facing surface 9 of a handle 10. As can be seen in Figure 2 a multiplicity of slots 20 extend axially across the circumferential edge of the wheel 8 at spaced positions and extend radially towards the centre of the wheel to divide the outer part of the wheel into a multiplicity of teeth 21. The handle 10, by which the carrier 1 can be carried, is a rigid U-shaped member having its two side limbs 11 and its intermediate limb 12 of channel-shaped cross-section. The handle 10 is secured to the carrier 1, with the slotted wheels 8 within respective circular walls 7, by means of a slidable circlip 13 arranged to engage a circumferential slot 14 in a cylindrical boss 15 which extends from the centre of each slotted wheel 8.

Pivotally mounted on the back of the portion 4 of the carrier 1 by means of pivot pins 16 is a substantially U-shaped operating lever 17 which carries a pawl 18 at the free end of each side limb 19. The operating lever 17 can be pivoted from a position in which each pawl 18 engages in a slot 20 between two adjacent teeth 21 of a slotted wheel 8 to a position in which each pawl 18 is clear of the slot 20. The pawls 18 are urged towards the slots 20 by springs (not shown). The operating lever 17 can be actuated using one hand by moving the intermediate limb 22 towards or away from back portion 4. The operating lever 17 can also be locked in a position in which the pawls 18 are engaged within the slots 20 by means of a locking arrangement 23 which embraces the intermediate limb 22 and holds it away from the back portion 3 of the body portion 2.

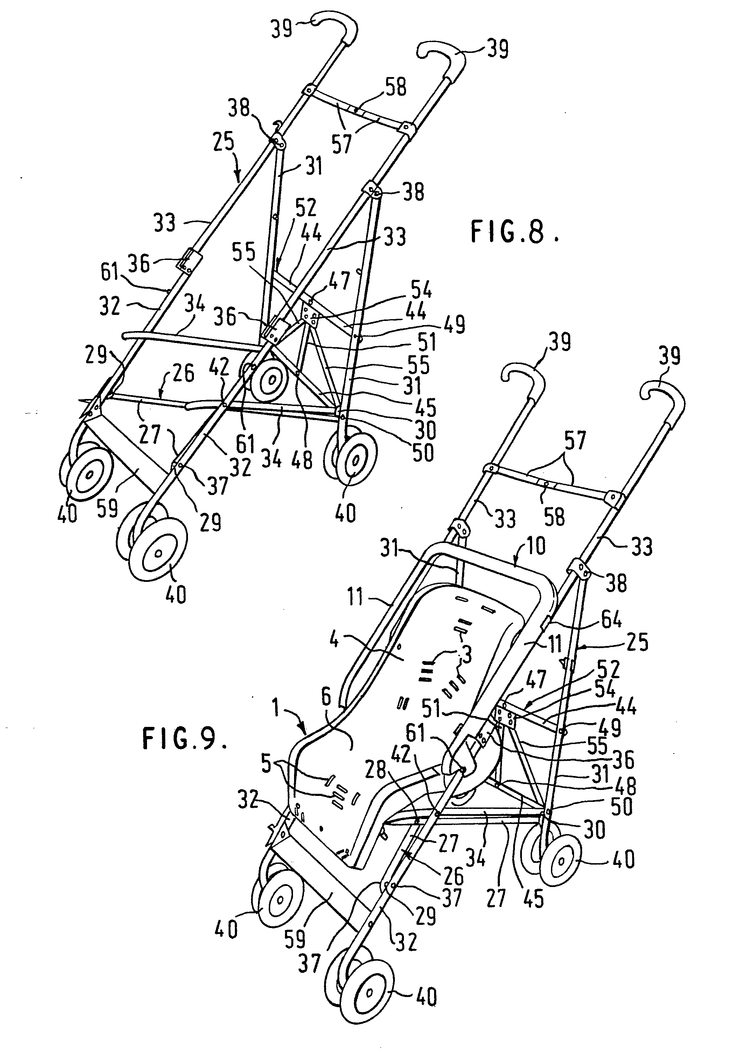

Referring now to Figures 8 to 11 also, a chassis 25 of a push chair, seen best in Figure 8, comprises a plurality of elongate rigid members which are interpivoted and foldable into a compact bundle so that the elongate rigid members extend substantially parallel to each other. The chassis 25 has a bottom X-frame 26 which extends in a plane from back to front of the chassis. The two members 27 of the X-frame 26 are interconnected by a central pivot pin 28 so that the frame 26 is foldable in the plane mentioned.

The chassis 25 further comprises a pair of identical side frames whose planes extend upwardly. The side frames are pivotally interconnected with respective front corners 29 and respective back corners 30 of the bottom X-frame 26, for pivoting and folding about the front and back corners 29 and 30, respectively, in the back to front sense. Each of the side frames comprises a chassis back member 31 which extends upwardly away from a back corner 30, the member 31 of one side frame being coplanar with the member 31 of the other side frame. Each side frame further comprises a pair of inter-pivoted bracing members, namely a lower brace member 32 and an upper brace member 33, and a support member 34.

The brace members 32 and 33 of each side frame slope upwardly and back between the respective front corners 29 of the bottom X-frame 26 and the upper end of the respective chassis back member 31. The members 32 and 33 are interconnected by a knuckle joint 36.

There is a pivot connection 37 between the lower brace member 32 and the respective front corner 29 of the X-frame 26 and a pivot connection 38 between the upper brace member 33 and the upper end of the respective chassis back member 31. Each upper brace member 33 has an extension to provide a pair of handles 39 for propelling the chassis 25 on wheels 40, or for carrying it when it is folded.

Each support member 34 extends between the respective back corner of the X-frame 26 and the respective lower brace member 32, the member 34 being pivotally connected to the back corner 30. The member 34 is also connected to the member 32 by a pivot connection 42 located between the knuckle joint 36 and the pivot connection 37. The member 34 in each side frame thereby ensures that folding of each side frame and of the bottom X-frame 26 take place simultaneously.

Two pairs of locking struts 44 and 45, respectively connected by pivot pins 47 and 48, have their opposite ends' pivotally connected to spaced portions of the back members 31 by pivot pins 49 and 50 and are interconnected by means of a guide link 51 to form a laterally collapsible bracing frame 52 consisting of two identical parallelogram linkages. Stop means are provided in the form of a slider 54, which is able to slide up and down guide link 51, and two supporting struts 55 which are pivotally connected to the slider 54 and to the pivot pins 49 to support the slider 54 relative to the back members 31 so that the two pairs of locking struts 44 and 45 are simultaneously movable into and out of an overcentre locking condition in which the frame members are held apart with the chassis in its extended condition as shown in Figure 8.

An auxiliary pair of centre-locking struts 57 inter-pivoted at 58 is pivotally connected at its outer ends to the upper brace members 33, between the handles 39 and the pivot connections 37, in order to stiffen and secure the upper part of the chassis 25. The front corners 29 of the bottom X-frame are tied by a flexible strap 59 which provides a footrest. A boss 61 extends outwards from each lower brace member 32 at a position just below the knuckle joint 36.

To secure the carrier 1 to the chassis 25 the chassis is first put into the extended position as seen in Figure 8 and is locked in this position by the bracing frame 52 and the locking struts 57. The handle 10 is then secured to the body portion 2 by springing the two side limbs 11 apart and inserting the slotted wheels 8 within the upstanding circular walls 7. The handle 10 is then locked to the body portion 2 by the slidable circlips 13 which are inserted in the circumferential slots 14 in the bosses 15.

The carrier 1 is then mounted on the chassis 25 by placing the body portion 2 within the two side frames and the two side limbs 11 are then pressed into close proximity with the two upper brace members 33 so that two radiused notches 62 on the free ends of the side limbs 11 engage the bosses 61 on the lower brace members 32 and two straight edges 63 on the outer surfaces of the free ends of the side limbs 11 ride behind and abut the sides of the knuckle joints 36. The handle 10 is locked in this position by resilient catches 64 on the upper ends of the side limbs 11 which clip on to the upper brace members 33.

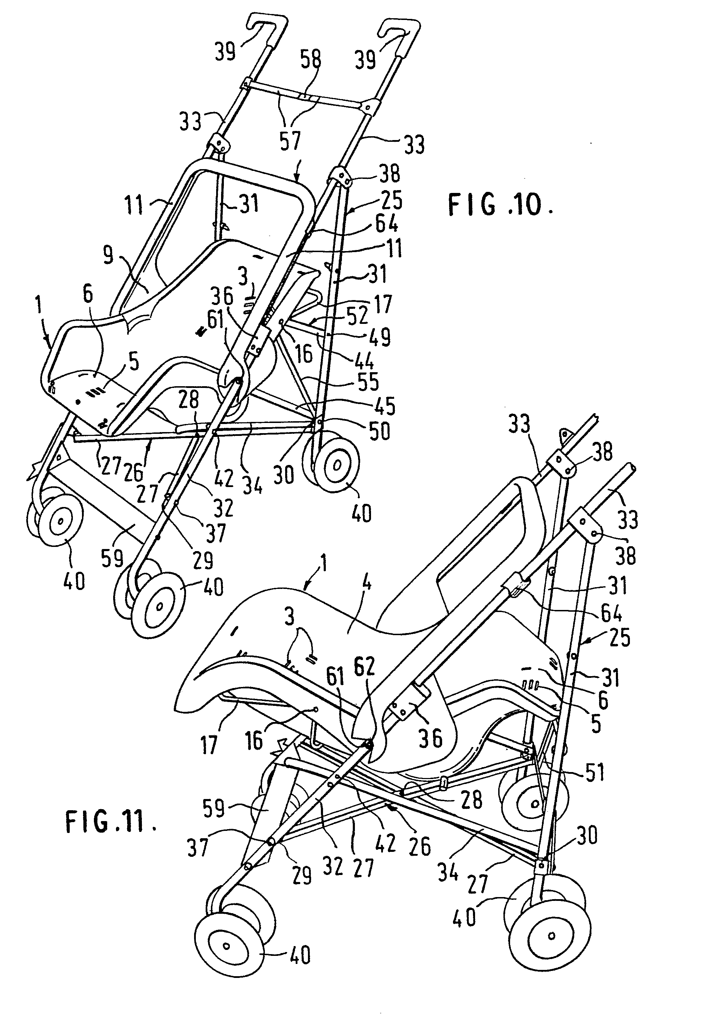

The body portion 2 can be adjusted to a plurality of different angular positions from a sitting position as shown in Figure 9 to a recumbent position as shown in Figure 10 by actuating the operating lever 17. The body portion 2 is retained in these different angular positions by the pawls 18 on the ends of the side limbs 19 of the operating lever 17 which engage one of the slots 20 between two adjacent teeth 21 on the slotted wheels 8. The pawls 18 are retained within the slots 20 by the locking arrangement 23 which holds the operating lever 17 away from the back portion 4 of the carrier and by the springs (not shown) which urge the pawls 18 into the slots.

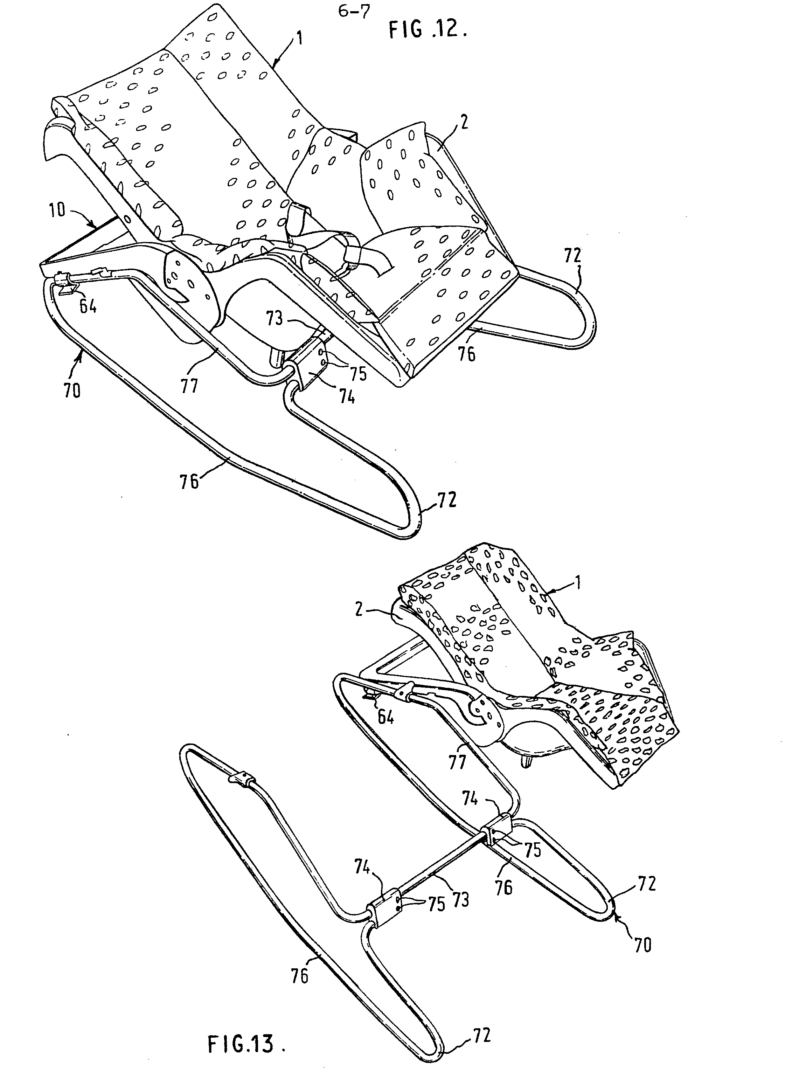

Although in the embodiment of the invention illustrated in Figure 9 and Figure 10 the body portion 2 faces away from the pair of handles 29 by which the chassis 25 can be propelled on the wheels 40, the body portion 2 can be attached to chassis 2 so that it faces towards the pair of handles 39 in a recumbent position as illustrated in Figure 11. When facing the handles 39 the body portion 2 can be adjusted to a plurality of different recumbent positions.

When the carrier 1 is detached from the chassis 25 the rigid handle 10 acts as a stand to support the carrier 1 on the ground. The operating lever 17 may be actuated to adjust the angle of the handle 10 so that the intermediate limb 12 engages the ground and the body portion 2 assumes a plurality of different angular positions from the sitting position shown in Figure 1 to a recumbent position corresponding to that shown in Figure 10.

Turning finally to Figures 12 to 15, a chassis 70 of a rocking chair, as best seen in Figure 13 comprises two substantially C-shaped tubular metal frames 72 which are connected together by a straight tubular metal member 73 which extends transversely between them. The free ends of the member 73 fit within respective knuckle joints 74 which also receive the free ends of the C-shaped frames 72. Clamping screws 75 secure the knuckle joints 74 to the ends of the frames 72 and the ends of the member 73.

To secure the carrier 1 to the chassis 70 the chassis is first put into the extended position as seen in Figure 13 and is locked in this position by tightening the clamping screws 75. When the chassis is in this extended position the planes of the C-shaped frames 72 are disposed substantially vertically and substantially parallel to one another with the arcuate backs 76 of the C's resting on the ground and spaced apart by the length of the member 73. The arcuate backs 76 of the frames 72 form the rocking surface on which the rocking chair can be rocked to and fro.

The carrier 1 is then mounted on the chassis 70 by placing the body portion 2 between the upper parts 77 of the frames 72 and the transversely extending member 73 within a resilient catch 78 mounted on the back of the body portion 2. The handle 10 is then locked to the two frames 72 by resilient catches 64 on the upper ends of the side limbs 11 which clip on to the upper parts 77.

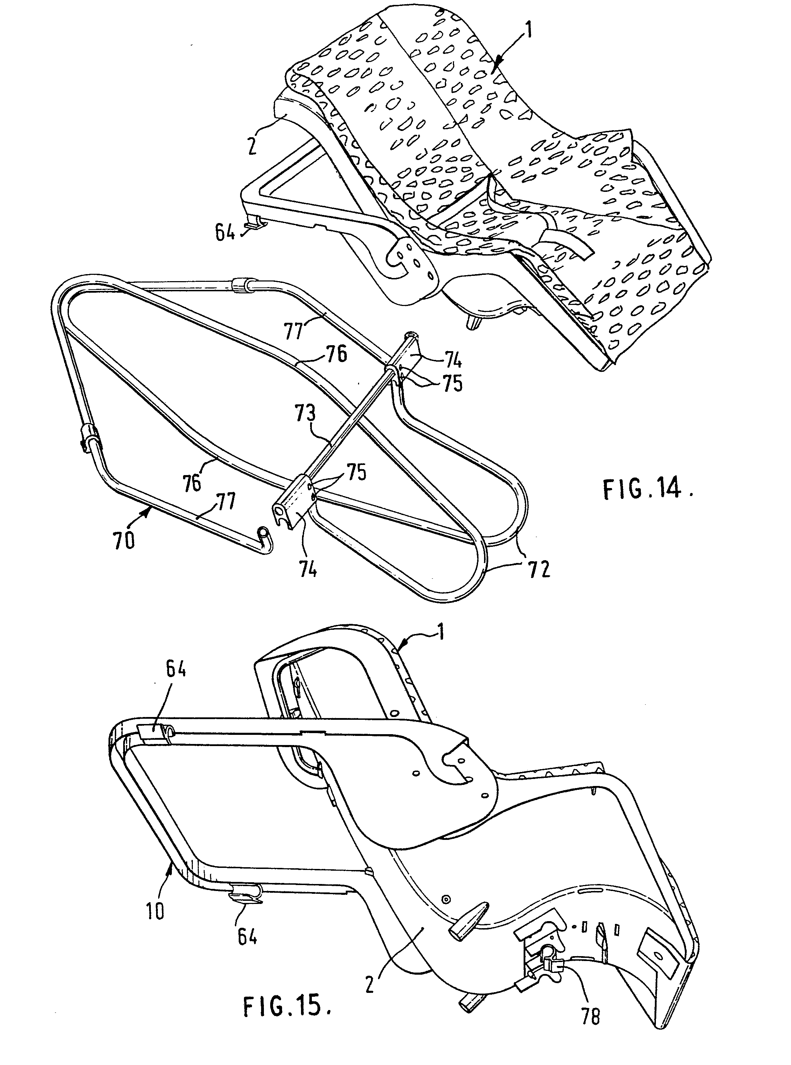

When the rocking chair is to be dis-assembled the side limbs 11 are removed from the resilient catches 64 and the transversely extending member 73 is removed from the resilient catch 78. The carrier 1 can then be separated from the chassis as shown in Figure 13. If the clamping screws 75 are then loosened and one end of each of the C-shaped frames is then removed from the knuckle joints 74 the C-shaped frames can be folded flat, one on top of the other, as seen in Figure 14. The rocking chair is then less cumbersome if it has to be moved by a motor car or by public transport such as a train or bus.

While in the embodiment of the invention described above the carrier 1 is secured to the chassis by an arrangement which includes a rigid handle 10 and the angular position of the body portion is adjusted to different angular positions by a pawl and slotted wheel 8 other arrangements may also be utilised. For example, the carrier 1 may be secured to the chassis by screw threaded members, such as wing nuts or knurled screws, which can be tightened by the fingers. Such screw threaded members may be arranged to clamp the body portion 2 to the chassis in a plurality of different angular positions and may be arranged to secure the body portion to the chassis facing towards or away from the handles by which the chassis is propelled. The handle may be formed by a wire, strap or other flexible member having its free ends secured to opposite sides of the body portion.

As a further modification the body portion 2 of the carrier 1 may be provided with a fitment 65 which is shown in dotted line in Figure 2. This fitment 65, which is attached to the front of the seat portion 6, modifies the sloping surface adjacent the apertures 5 so that the front of the seat portion 6 has a pronounced right-angled profile which enables a child to assume an upright sitting position. The fitment 65 is also provided with a straight portion which extends substantially horizontally and forms a foot rest 66. The fitment 65 can readily be detached if the child wishes to adopt a recumbent position.

Claims

1. A carrier for a baby or a child comprising a body portion arranged to accommodate the baby or child in a sitting or a recumbent position and a handle for carrying the carrier, characterised by means for securing the carrier to a chassis; means for adjusting the angular position of the carrier when secured to the chassis; and means for locking the carrier in at least two different angular positions.

2. A carrier as claimed in Claim 1, wherein the means for adjusting the angular position of the carrier and locking the carrier in at least two angular positions comprises a pawl which co-operates with a slotted wheel mechanism.

3. A carrier as claimed in Claim 1 or Claim 2, wherein the means for locking the carrier in at least two angular positions is arranged to be locked and released using one hand.

4. A carrier as claimed in any preceding claim, wherein the handle is a rigid member which is arranged to act as a stand to support the carrier on the ground when the carrier is separated from the chassis.

5. A carrier as claimed in any preceding claim, wherein the handle forms part of the means for securing the carrier to a chassis.

6. A carrier as claimed in Claim 1 or Claim 2, wherein the means for securing the carrier to the chassis comprises a plurality of screw threaded members which clamp the carrier to the chassis.

7. A carrier as claimed in Claim 6, wherein the screw threaded members are arranged to lock the carrier in at least two different angular positions.

8.      A carrier as claimed in Claim 6 or Claim 7, wherein the handle comprises a flexible member.

9.      A carrier as claimed in any preceding claim, wherein the body portion which supports the baby or child comprises a substantially rigid member.

10.      A carrier as claimed in any preceding claim, secured to a chassis of a push chair comprising a plurality of elongate rigid members which are interpivoted and foldable into a compact bundle in which the rigid members extend substantially parallel to each other.

11.      A carrier as claimed in any one of Claims 1 to 9, secured to a chassis of a rocking chair comprising two C-shaped frames which are spaced apart to provide rocking surfaces and are foldable flat one on top of the other.

12.      A carrier as claimed in any preceding claim, wherein the handle comprises a rigid U-shaped member, the free ends of the side limbs of the U being respectively connected to opposite sides of the body portion which supports the baby or child, and the side limbs of the U being of channel-shaped cross-section and arranged to fit over two correspondingly spaced elongate rigid members of the chassis.

13.      A carrier as claimed in Claim 14, secured to the chassis of a push chair and wherein the spaced elongate rigid members over which are fitted the side limbs of the U form handles by which the chassis can be propelled.

14.      A carrier as claimed in Claim 13, secured to the chassis so that a baby or a child supported in the body portion faces towards the handles formed by the spaced elongate rigid members.

15.      A carrier as claimed in Claim 13, secured to the chassis so that a baby or a child supported in the body portion faces away from the handles formed by the spaced elongate rigid members.

16.     A carrier as claimed in any preceding claim, provided with a cover of textile or synthetic material and filled with padding material.

0050017

FIG .1.

FIG.2.

FIG.4.

FIG.3.

FIG.5.

FIG.6.

FIG.7.

4-7

FIG.8.

FIG.9.

FIG .10 .

FIG .11 .

6-7 FIG.12.

FIG.13.

0050017

FIG.14.

FIG.15.

European Patent
Office

**EUROPEAN SEARCH REPORT**

Application number

EP 81 30 4699

| | **DOCUMENTS CONSIDERED TO BE RELEVANT** | | | **CLASSIFICATION OF THE APPLICATION (Int. Cl. 3)** |
|---|---|---|---|---|
| Category | Citation of document with indication, where appropriate, of relevant passages | Relevant to claim | | |
| | US - A - 4 065 177 (HYDE)<br>* Column 2, lines 28-64; column 3, lines 12-56; figures * | 1,9,10,<br>14,15 | | A 47 D 1/10<br>B 62 B 7/08 |
| | FR - A - 2 369 814 (SCHALLER)<br>* Page 4, lines 5-18; page 4, line 26 - page 5, line 17; figures * | 1,5,9 | | |
| | US - A - 3 804 459 (NOSE)<br>* Column 2, lines 7-67; column 3, lines 9-12; figures * | 2,9,11 | | **TECHNICAL FIELDS SEARCHED (Int.Cl. 3)**<br><br>A 47 D<br>B 62 B |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document. but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 19-01-1982 | VANDEVONDELE |

EPO Form 1503.1 06.78